# EUROPÄISCHE PATENTSCHRIFT

(11) **EP 3 153 557 B1**
(45) Veröffentlichungstag und Bekanntmachung des Hinweises auf die Patenterteilung: **19.01.2022**
(21) Anmeldenummer: 15189152.0
(22) Anmeldetag: 09.10.2015
(51) Int. Cl.: C09D 183/04, C09D 5/10, C08G 77/58

(54) **ANTIKORROSIVE BESCHICHTUNGSZUSAMMENSETZUNG**
ANTI-CORRROSIVE COATING COMPOSITION
COMPOSITION DE REVÊTEMENT ANTICORROSIVE

(43) Veröffentlichungstag der Anmeldung: 12.04.2017
(73) Patentinhaber: EWALD DÖRKEN AG, 58313 Herdecke (DE)
(72) Erfinder: Roth, Marcel, 40589 Düsseldorf (DE); Kurze, Vanessa, 58455 Witten (DE); Lämmer, Marcus, 42281 Wuppertal (DE); Böhm, Sandra, 58256 Ennepetal (DE); Großmann, Verena, 58313 Herdecke (DE); Reusmann, Gerhard, 45259 Essen (DE)
(74) Vertreter: Von Rohr Patentanwälte Partnerschaft mbB

(56) Entgegenhaltungen:
- EP-B1- 1 646 695
- WO-A1-2007/104121
- US-A- 5 432 007
- US-A1- 2009 017 315

## Beschreibung

Die vorliegende Erfindung betrifft das technische Gebiet des Korrosionsschutzes.

Insbesondere betrifft die vorliegende Erfindung eine antikorrosive Beschichtungszusammensetzung sowie ein Verfahren zum Aufbringen der antikorrosiven Beschichtungszusammensetzung.

Darüber hinaus betrifft die vorliegende Erfindung ein mit einer antikorrosiven Beschichtung versehenes Metallsubtrat.

WO2007/104121 A1 offenbart eine nichtwässrige antikorrosive Beschichtungszusammensetzung aufweisend ein Polysiloxan, einen Vernetzer, einen Katalysator und Zinkpulver zur Anbringung auf Stahl.

Im Zusammenhang mit der Erfindung sind besonders bei Raumtemperatur härtende Beschichtungszusammensetzungen von Interesse, wie sie beispielsweise in der EP 0591 955 B1 offenbart sind. Die dort offenbarte Beschichtungszusammensetzung weist als wesentliche Elemente ein Polysiloxan als Bindemittel sowie eine organische Borverbindung als Vernetzungsmittel auf und ist so ausgelegt, dass die Beschichtung bei Raumtemperatur trocknet, wenn auch mit erheblichem Zeitbedarf von mehr als 70 Stunden bei Raumtemperatur.

Die im Stand der Technik verwendeten organischen Borverbindungen sind unter Umweltschutzaspekten unerwünscht und sollen vermieden werden.

Zur Lösung dieser Aufgabe wird eine antikorrosive Beschichtungszusammensetzung nach Anspruch 1 und ein Verfahren zum Aufbringen der antikorrosiven Beschichtungszusammensetzung nach Anspruch 9 vorgeschlagen.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können. Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine antikorrosive Beschichtungszusammensetzung gemäss Anspruch 1, aufweisend mindestens ein Polysiloxan und Metallpartikel sowie mindestens einen Vernetzer, wobei die Beschichtungszusammensetzung bei Raumtemperatur chemisch vernetzt.

Die erfindungsgemäße antikorrosive Beschichtungszusammensetzung zeichnet sich durch eine einfache Zusammensetzung aus, bei der die Verwendung bororganischer Verbindungen vermieden wird. Die erfindungsgemäße Zusammensetzung ist einfach anwendbar und härtet bei Raumtemperatur innerhalb kurzer Zeit auf dem Substrat aus. Neben der einfachen Zusammensetzung zeichnet sich die erfindungsgemäße Zusammensetzung durch besonders einfache Verarbeitung und Applizierbarkeit aus.

Die Beschichtungszusammensetzung kann ohne oder nur mit einem geringen Anteil an organischen Lösemitteln, insbesondere den unter Gesichtspunkten des Umwelt- und Gesundheitsschutzes problematischen und zu vermeidenden VOCs *(**V**olatile **O**rganic **C**ompound),* formuliert werden. Die erfindungsgemäße Beschichtungszusammensetzung ist folglich auch unter Erwägungen des Arbeitsschutzes unbedenklich. Darüber hinaus entfallen aufwendige apparative Maßnahmen zum Sammeln der organischen Lösemittel.

Im Allgemeinen ist die Beschichtungszusammensetzung insbesondere zumindest im Wesentlichen frei von Wasser, vorzugsweise frei von Wasser.

Weiterhin ist es im Rahmen der vorliegenden Erfindung üblicherweise vorgesehen, dass die Beschichtungszusammensetzung insbesondere zumindest im Wesentlichen frei ist von organischen Lösemitteln.

Es ist jedoch möglich, dass die Beschichtungszusammensetzung organische Lösemittel, insbesondere VOCs, in Mengen von höchstens 5 Gew.-%, insbesondere höchstens 3 Gew.-%, bezogen auf die Beschichtungszusammensetzung, aufweist. Gleichfalls ist es möglich, dass die Beschichtungszusammensetzung organische Lösemittel, insbesondere VOCs, in Mengen von 0,01 bis 5 Gew.-%, insbesondere 0,1 bis 3 Gew.-%, bezogen auf die Beschichtungszusammensetzung, aufweist. Organische Lösemittel werden der Beschichtungszusammensetzung üblicherweise nur zur Einstellung der Viskosität beigemischt, wie nachfolgend noch ausgeführt wird.

Die antikorrosive Beschichtungszusammensetzung ist somit bevorzugt eine VOC-arme oder eine VOC-freie Beschichtungszusammensetzung.

Gemäß einer bevorzugten Ausführungsform vernetzt die Beschichtungszusammensetzung in Gegenwart von Luftfeuchtigkeit. Da die Vernetzungsreaktion dieser Systeme erst in nennenswertem Umfang einsetzt, wenn die Beschichtungszusammensetzung mit Luftfeuchtigkeit in Kontakt kommt, bietet die erfindungsgemäße antikorrosive Beschichtungszusammensetzung eine ausreichend lange Topfzeit, also eine ausreichend lange Zeitspanne, innerhalb derer die Zusammensetzung verarbeitet werden kann. Zudem ist die erfindungsgemäße Zusammensetzung nahezu unbegrenzt lagerfähig, immer vorausgesetzt, die Beschichtungszusammensetzung ist gegen den Zutritt von Wasser bzw. Feuchtigkeit, insbesondere Luftfeuchtigkeit geschützt. Wird das Gebinde gut gegen den Zutritt von Feuchtigkeit, insbesondere Luftfeuchtigkeit, gesichert, kann das angebrochene Gebinde weit länger als eine Woche aufbewahrt werden.

Im Allgemeinen vernetzt die Beschichtungszusammensetzung innerhalb von 300 Minuten, insbesondere 150 Minuten, vorzugsweise 60 Minuten. Das Vernetzen ist unter günstigen Anwendungsbedingungen nach 30 Minuten abgeschlossen. Insbesondere vernetzt die Beschichtungszusammensetzung innerhalb eines Zeitraumes von 1 bis 300 Minuten, insbesondere 2 bis 150 Minuten, vorzugsweise 3 bis 60 Minuten, bevorzugt 5 bis 30 Minuten.

Die erfindungsgemäße Beschichtungszusammensetzung härtet in einem breiten Raum- oder Umgebungstemperaturbereich aus. Möglich sind dabei Temperaturen von nicht weniger als -10 °C und nicht mehr als 45 °C. Bevorzugt sind Temperaturen von 5 °C bis 35 °C und besonders bevorzugt ist der Temperaturbereich von 15 bis 25 °C. Das Konzept des Härtens bei Raum- bzw. Umgebungstemperatur ist im Zusammenhang mit der vorliegenden Erfindung so definiert, dass keine maschinelle Trockenausrüstung, wie zum Beispiel Geräte für die thermische Härtung oder Härtung durch Strahlung (Ofen oder Elektronenstrahlgerät), für das Härten der antikorrosive Beschichtungszusammensetzung auf dem Substrat erforderlich ist, sofern die Umgebungstemperatur -10 °C bis 45 °C beträgt. Das Härten ohne maschinelle Trockenausrüstung erlaubt das Beschichten in Räumen oder Hallen bei Raumtemperatur aber auch das Beschichten von Konstruktionen im Freien bei Umgebungstemperatur.

Die Reaktion setzt bei niedrigen Temperaturen ein und zeigt bei Raum- bzw. Umgebungstemperatur bereits eine schnelle Härtung. Die Geschwindigkeit der Härtung hängt dabei im Fall der in Gegenwart von Luftfeuchtigkeit vernetzenden Systeme stark von der Luftfeuchtigkeit des Raumes (beim Beschichten in Räumen) oder der Umgebung (beim Beschichten außerhalb von Räumen) ab. In Gegenwart von Luftfeuchtigkeit vernetzende Beschichtungszusammensetzungen härten üblicherweise am besten aus, wenn der Wassergehalt der Luft 2 g/m³ bis 14 g/m³ beträgt, bevorzugt 5 g/m³ bis 11 g/m³.

Die erfindungsgemäße antikorrosive Beschichtungszusammensetzung weist somit mindestens ein Polysiloxan, Metallpartikel sowie mindestens einen Vernetzer auf, wobei die Beschichtungszusammensetzung bei Raumtemperatur vernetzt. Die Beschichtungszusammensetzung ist vorzugsweise frei von Wasser, weist keine oder nur geringen Mengen an organischen Lösemitteln auf und vernetzt in Gegenwart von Luftfeuchtigkeit chemisch. Die erfindungsgemäße Beschichtungszusammensetzung ist frei von bororganischen Verbindungen, bevorzugt vollständig frei von Bor.

Die erfindungsgemäße antikorrosive Beschichtungszusammensetzung kann ein flüssiges Polysiloxan in unverdünnter Form aufweisen. Das Polysiloxan ist vorzugsweise eine lösemittelfreie, niedrigviskose Flüssigkeit. Auch der Vernetzer liegt bevorzugt flüssig in unverdünnter Form, also mit 100 % Aktiv-Gehalt vor. Polysiloxan und Vernetzer werden zusammen mit den Metallpartikeln bevorzugt als wasserfreies Ein-Komponenten-System durch Mischen hergestellt und bis zur Anwendung gelagert.

Bei Applizieren auf ein Substrat, bevorzugt auf ein metallisches Substrat, setzt beim einem in Gegenwart von Luftfeuchtigkeit vernetzeden System nach Kontakt mit dem in der Luft enthaltenen Wasser (mit der Luftfeuchtigkeit) eine Polykondensationsreaktion ein, die zum chemischen Vernetzen, auch als Härten oder Abbinden bezeichnet, führt.

Was nun die Substrate anbelangt, welche mit der erfindungsgemäßen Beschichtungszusammensetzung versehen, insbesondere beschichtet, werden können, so können diese vielerlei Gestalt aufweisen und aus unterschiedlichsten Materialien aufgebaut sein. Üblicherweise ist der Werkstoff, aus welchem das Substrat besteht ausgewählt aus der Gruppe von Glas, Keramik, mineralischen oder organischen Oberflächen, wie z.B. Kunststoff oder Papier, und Metall sowie deren Mischungen, wobei Substrate, welche Metall enthalten oder aus diesem bestehen, bevorzugt sind. Besonders bevorzugt sind Eisen enthaltende Substrate, insbesondere Stahlsubstrate.

Polysiloxan und Vernetzer bilden gemeinsam ein reaktives Bindemittelsystem. In diesem reaktiven Bindemittelsystem beträgt der Anteil des Polysiloxans mehr als 90 Gew.-%, der komplementäre Anteil des Vernetzers beträgt weniger als 10 Gew.-%.

Üblicherweise enthält die Beschichtungszusammensetzung das reaktive Bindemittelsystem, insbesondere bestehend aus Polysiloxan und Vernetzer, in einem Anteil von maximal 30 Gew.-%, bevorzugt von maximal 20 Gew.-%, besonders bevorzugt mit einem Anteil von maximal 10 Gew.-%. Im Rahmen der vorliegenden Erfindung kann es vorgesehen sein, dass die Beschichtungszusammensetzung das reaktive Bindemittelsystem, in Mengen von 2 bis 30 Gew.-%, insbesondere 3 bis 20 Gew.%, vorzugsweise 4 bis 10 Gew.-%, bezogen auf die Beschichtungszusammensetzung, aufweist.

Im Allgemeinen weist die Beschichtungszusammensetzung ein reaktives Polysiloxan auf. In diesem Zusammenhang hat es sich bewährt, wenn das Polysiloxan ausgewählt ist aus silanolfunktionalisierten Polysiloxanen und alkoxyfunktionalisierten Polysiloxanen sowie deren Mischungen.

Diese funktionalisierten Polysiloxane können optional mit alkoxy-, acetoxy-, epoxy-, oxime- oder aminterminierten Silanen kombiniert werden. Typisch können zum Beispiel silanolterminierte Dimethylsiloxane, silanolterminierte Diphenylsiloxane, silanolterminierte Polytrifluoropropylmethylsiloxane, silanolterminierte trimethylsilylmodifizierte Q-Harze, silanolterminierte Vinylmethylsiloxan-Copolymere oder methoxyfunktionalisierte Siloxane einzeln oder in Mischung als Polysiloxane eingesetzt werden. Solche Siloxane werden beispielsweise von Gelest Inc. unter den Marken DMS, PDS oder FMX sowie SQT angeboten, sie werden auch von Dow Corning (Marke: US CF), Evonik Industries (Marke: Silicophen) oder Wacker (Marke: Silres) angeboten. Für die vorstehend genannten Polysiloxane mit endständigen reaktiven Gruppen läuft bei Hinzutreten von Luftfeuchtigkeit bei einer Umgebungstemperatur von -10 °C bis 45 °C eine zügige Polykondensationsreaktion ab.

Besonderes gute Ergebnisse werden im Rahmen der vorliegenden Erfindung erhalten, wenn das Polysiloxan ein gewichtsmittleres Molekulargewicht M_{w} im Bereich von 200 bis 50.000 g/mol, insbesondere 500 bis 30.000 g/mol, vorzugsweise 800 bis 25.000 g/mol , bevorzugt 1.000 bis 20.000 g/mol, besonders bevorzugt 1.500 bis 18.000 g/mol, aufweist.

Nach einer vorteilhaften Ausführung weist das erfindungsgemäß eingesetzte Polysiloxan eine dynamische Viskosität nach Brookfield bei 20 °C von höchstens 10.000 mPas auf, bevorzugt höchstens 1000 mPas, besonders bevorzugt von mindestens 50 mPas. Gleichfalls kann es vorgesehen sein, dass das Polysiloxan eine dynamische Viskosität nach Brookfield bei 20 °C im Bereich von 10 bis 10.000 mPas, insbesondere 20 bis 5.000 mPas, vorzugsweise 30 bis 300 mPas, besonders bevorzugt 50 bis 100 mPas, aufweist. Da die Viskosität des eingesetzten flüssigen Polysiloxans Einfluss auf die Verarbeitungseigenschaften der antikorrosiven Beschichtungszusammensetzung nimmt, wird eine niedrige Viskosität bevorzugt.

Als Vernetzer wird eine Komponente oder eine Mischung von Komponenten, ausgewählt aus der Gruppe von reaktiven Silanen, Silanhydrolysaten, Titanaten, Zirkonaten, metallorganischen Verbindungen, Säuren und Basen sowie deren Mischungen, eingesetzt. Bevorzugt ist der Vernetzer ausgewählt aus reaktiven Silanen, Silanhydrolysaten, Titanaten, Zirkonaten, metallorganische Verbindungen sowie deren Mischungen, besonders bevorzugt reaktiven Silanen, Titanaten, Zirkonaten, metallorganische Verbindungen sowie deren Mischungen. Insbesondere die zuletzt aufgezählten Vernetzer werden in das bei der Polykondensation entstehende Polymergerüst eingebaut; sie reagieren darüber hinaus in Gegenwart von Luftfeuchtigkeit bei Raumtemperatur in kurzer Zeit mit dem Polysiloxan.

Üblicherweise ist das Silan ausgewählt ist aus der Gruppe von alkoxy-, acetoxy-, epoxy-, vinyl-, oxime-, mercapto- und aminofunktionalisierten Silanen, insbesondere Aminosilanen und/oder Alkoxysilanen, vorzugsweise alpha-Aminoalkoxysilanen.

Das Silanhydrolysat ist in der Regel ausgewählt aus silanol-, alkoxy- und aminofunktionalisierten Silanen und deren Mischungen.

Gemäß einer bevorzugten Ausführungsform der vorliegenden Erfindung weisen das Silan oder das Silanhydrolysat ein gewichtsmittleres Molekulargewicht M_{w} unter 2.000 g/mol auf. Insbesondere kann es vorgesehen sein, dass das Silan oder das Silanhydrolysat ein gewichtsmittleres Molekulargewicht M_{w} im Bereich von 200 bis 3.000 g/mol, insbesondere 250 bis 2.500 g/mol, vorzugsweise 250 bis 2.000 g/mol, aufweist.

Die Verwendung von Silanen und/oder oligomerer, niedermolekularer Silanhydrolysate mit einem gewichtsmittleres Molekulargewicht M_{w} unter 2.000 g/mol erlaubt eine gezielte Einstellung der Viskosität der Beschichtungszusammensetzung. Bezogen auf das reaktive Bindemittelsystem können Silane und/oder Silanhydrolysate zur Erstellung der Viskosität in einem Anteil von bis zu 10 Gew.-%, bevorzugt in einem Anteil von bis zu 5 Gew.-% eingesetzt sein. Silane wirken auch in geringen Einsatzmengen von z. B. 0,5 Gew.-% bis 1 Gew.-%; der Fachmann kann die Minimierung ebenso wie die Optimierung des Silan-Einsatzes im Hinblick auf die Einstellung der Viskosität der Beschichtungszusammensetzung in wenigen Versuchen ermitteln.

In Bezug auf die Titanate und Zirkonate werden bevorzugt organische Titan- und Zirkoniumverbindungen eingesetzt. Vorteilhaft sind Alkyltrialkoxy-, Trialkylalkoxyoder Tetraalkoxyverbindungen aber auch Dialkyldialkoxyverbindungen von Titan oder Zirkonium. Diese Titan- oder Zirkonium-Alkoxyverbindungen können jeweils einzeln oder in Mischung eingesetzt werden. Als Substituenten dieser Alkoxyverbindungen sind geeignet Phenyl-, Ethyl-, Methyl- und Vinylgruppen, wobei die Reaktivität der Alkoxyverbindung in der Folge der vorgenannten Gruppen steigt. Typische Vernetzer sind Tetra-n-butyltitanat, Tetraisopropyltitanat, Vinyltri-n-butlytitanat. Diese Vernetzer sind ohne weiteres bei der Herstellung der antikorrosiven Beschichtungszusammensetzung mit der Polysiloxan-Komponente mischbar.

Im Rahmen der vorliegenden Erfindung ist es üblicherweise vorgesehen, dass die organische Metallverbindung ausgewählt ist aus metallorganischen Verbindungen, insbesondere Alkoxiden, von Aluminium, Eisen, Zink und Zinn sowie deren Mischung. Diese metallorganischen Vernetzer können für sich genommen oder zusätzlich zu den vorgenannten Vernetzern in der Beschichtungszusammensetzung enthalten sein, werden jedoch bevorzugt in geringen Mengen mit weiteren Vernetzern eingesetzt und dienen aufgrund ihrer hohen Reaktivität als Reaktionsstarter.

Alternativ oder in Kombination mit den vorgenannten Vernetzern können auch organische oder anorganische Säuren oder Laugen als Vernetzer eingesetzt sein. Geeignet sind beispielsweise Phosphorsäure, Salpetersäure, Salzsäure, Schwefelsäure, Ameisensäure, Bernsteinsäure, Essigsäure, Peressigsäure, Oxalsäure oder Zitronensäure, jeweils einzeln oder in Kombination miteinander. Eine typische Lauge ist Natriumhydroxidlösung.

Wesentlicher Bestandteil der antikorrosiven Beschichtungszusammensetzung sind Metallpartikel. Solche Metallpartikel, insbesondere aus Zink, Aluminium, Magnesium, Mangan oder Nickel aber auch eine Mischung oder eine Legierung dieser Metalle sind zur Verwendung in antikorrosiven Beschichtungen bekannt und üblich. Besonders häufig werden Zink und Aluminium in Mischung oder als Legierung eingesetzt. Sie verleihen der auf das Substrat aufgebrachten Beschichtung kathodische Schutzwirkung.

Im Rahmen der vorliegenden Erfindung weist die antikorrosive Beschichtungszusammensetzung einen Anteil an Metallpartikeln im Bereich von 70 bis 98 Gew.-%, insbesondere 80 bis 96 Gew.-%, vorzugsweise 90 bis 96 Gew.-%, bezogen auf die Beschichtungszusammensetzung, auf. Nach einer vorteilhaften Ausführung der Erfindung enthält die antikorrosive Beschichtungszusammensetzung mindestens 70 Gewichts-% Metallpartikel, vorzugsweise mindestens 80 Gewichts-% Metallpartikel, besonders bevorzugt mindestens 90 Gewichts-% Metallpartikel. Überraschenderweise können diese hohen Anteile von Metallpartikeln ohne weiteres durch den korrespondierenden Anteil an Polysiloxan und Vernetzer, d. h. an reaktivem Bindemittel, als Beschichtung fest auf einem metallischen Substrat verankert werden.

Metallpigmente, insbesondere kommerziell erhältliche Metallpigmente, sind oftmals einer Oberflächenbehandlung unterzogen worden. Üblicherweise erfolgt die Oberflächenbehandlung in Form einer Beschichtung, wobei die Oberfläche der Metallpartikel mit Metalloxiden, wie beispielsweise Aluminiumoxid, Titanoxid, Zikoniumoxid, Chromoxid, Nickeloxid oder Oxiden der Seltenen Erden, oder auch Siliciumdioxid sowie anorganischen oder organischen Polymeren, wie beispielsweise Fettsäuren, insbesondere Stearinsäure oder Ölsäure, beschichtet wird. In diesem Zusammenhang ist insbesondere eine Behandlung bzw. Beschichtung mit Stearinsäure üblich, um die Metallpigmente vor Oxidation zu schützen. Im Rahmen der vorliegenden Erfindung können oberfächenbehandelte Metallpartikel, insbesondere ohne Einschränkung, verwendet werden.

Vorteilhafterweise kann es vorgesehen sein, dass die Metallpartikel sphärisch sind.

Sphärische Metallpartikel sind mit geringen Durchmessern verfügbar, beispielsweise mit einer mittleren, volumengewichteten Größe von weniger als 10 µm, bevorzugt von weniger als 5 µm, vorteilhaft mit einer Größe von größer als 2 µm, typischerweise mit einer Größe von 2 µm bis 3 µm. Auf einem Substrat, insbesondere einem metallischen Substrat, kann eine Schichtdicke von bis zu 100 µm, bevorzugt von bis zu 50 µm, vorteilhaft von bis zu 25 µm, bevorzugt von bis zu 10 µm, besonders bevorzugt von 5 µm oder mehr ohne Weiteres unter Verwendung solcher sphärischer Metallpartikel hergestellt werden. Die Metallpartikel bewirken als kathodisch aktive Metallpartikel einen guten Korrosionsschutz.

Bis zu 80 Gewichts-% der für die erfindungsgemäße Beschichtungszusammensetzung eingesetzten Metallpartikel, insbesondere der sphärischen Metallpartikel, können durch lamellenförmige Metallpartikel gebildet bzw. ersetzt werden. Für die lamellenförmigen Metallpartikel werden dieselben Metalle, Legierungen oder Mischungen von Metallen eingesetzt wie für die Metallpartikel im Allgemeinen, nämlich Zink, Aluminium, Magnesium, Mangan und Nickel.

Durch die lamellenförmigen Metallpartikel verbessert sich insbesondere die antikorrosive Wirkung, aber auch das Absatzverhalten der antikorrosiven Beschichtungszusammensetzung.

Gemäß einer besonderen Ausführungsform der vorliegenden Erfindung ist es möglich, dass die Beschichtungszusammensetzung keine sphärischen Metallpartikel enthält. Insbesondere ist es möglich, dass die Beschichtungszusammensetzung nicht sphärische, insbesondere lamellenförmige Metallpartikel, in Mengen von 70 bis 98 Gewichts-%, insbesondere 80 bis 96 Gewichts-%, vorzugsweise 90 bis 96 Gewichts-%, bezogen auf die Beschichtungszusammensetzung, aufweist. Wie die Anmelderin überraschenderweise herausgefunden hat, ist es möglich, Beschichtungszusammensetzungen mit den zuvor genannten Viskositäten zu erhalten, wenn vollkommen auf den Einsatz sphärischer Metallpartikel verzichtet wird. Wenn die Beschichtungszusammensetzung keine sphärischen Metallpartikel enthält, so ist es unerlässlich, dass die Metallpartikel nicht mit Fettsäuren, speziell mit Stearinsäure, behandelt sind. Mit nicht-sphärischen, vorzugsweise lamellenförmigen, Metallpartikeln, welche nicht mit Fettsäuren behandelt sind, lässt sich die Viskosität der Beschichtungszusammensetzung in den zuvor genannten Bereichen einstellen, wobei gleichzeitig die Korrosionsbeständigkeit der resultierenden Beschichtungen erhöht wird.

Nach einer bevorzugten Ausführung der Erfindung wird die antikorrosive Beschichtungszusammensetzung als Ein-Komponenten-System hergestellt, gelagert und aufgetragen. Alternativ, insbesondere wenn ein Absetzen der Metallpartikel zu befürchten ist, kann die erfindungsgemäße antikorrosive Beschichtungszusammensetzung als 2-Komponenten-System hergestellt und gelagert werden. Vor dem Auftragen werden dann eine erste Komponente, bestehend aus Polysiloxan und Vernetzer, sowie eine zweite Komponente, bestehend aus Metallpartikeln, gemischt und dann aufgetragen.

Bis zu 15 Gewichts-%, vorzugsweise bis zu 5 Gewichts-% der in der antikorrosiven Beschichtungszusammensetzung eingesetzten Metallpartikel können durch andere Metallpartikel wie zum Beispiel farbgebende Partikel (Pigmente) oder durch andere funktionale Partikel, zum Beispiel Schmierstoffe, die als Feststoff vorliegen, wie Molybdänsulfid oder Polytetrafluorethylen, oder die Leitfähigkeit beeinflussende Partikel, wie z. B. Ruß oder Nanospheres, oder die Schweißbarkeit beeinflussende Partikel ersetzt werden. Farbgebende oder funktionale Partikel können jeweils einzeln oder in Mischung in der antikorrosiven Beschichtungszusammensetzung eingesetzt werden.

Die erfindungsgemäße antikorrosive Beschichtungszusammensetzung weist vorzugsweise kein Wasser auf. Entsprechend ist die Viskosität, wie oben erläutert nur das reaktive Bindemittelsystem einstellbar, beispielsweise mit Silanen und Silanhydrolysaten.

Ebenfalls zur Einstellung der Viskosität kann die wasserfreie, antikorrosive Beschichtungszusammensetzung organische Lösungsmittel enthalten. Nach einer vorteilhaften Ausführung der Erfindung enthält die Beschichtungszusammensetzung maximal 3 Gewichts-% Lösungsmittel, so dass sie als VOC-arme Beschichtungszusammensetzung zu bezeichnen ist. Bevorzugt ist die erfindungsgemäße Beschichtungszusammensetzung VOC-frei, dass heißt, sie enthält nur sehr geringe Mengen Lösungsmittel, weder niedrig siedende noch hoch siedende Lösungsmittel. Besonders bevorzugt ist es, wenn die erfindungsgemäße Beschichtungszusammensetzung lösemittelfrei ist. Sofern doch gewünscht, werden übliche Lösungsmittel eingesetzt, wie zum Beispiel Methoxypropylacetat (MPA), Dibasic-Ester oder Testbenzin.

Weitere Additive wie Dispergienhilfen, Antiabsetzmittel, Entschäumer, Rheologiehilfsmittel, Korrosionsinhibitoren oder Haftvermittler, die aus dem Stand der Technik bekannt sind, können jeweils für sich oder in Kombination miteinander Bestandteil der Beschichtungszusammensetzung sein.

Weiterer Gegenstand der vorliegenden Erfindung - gemäß einem **zweiten** Aspekt der vorliegenden Erfindung - ist Verfahren zum Beschichten eines Metallsubstrats mit einer antikorrosiven Beschichtungszusammensetzung, insbesondere wie zuvor beschrieben, umfassend die folgenden Verfahrensschritte:
(a) Reinigen des Metallsubstrats
(b) Aufbringen der antikorrosiven Beschichtungszusammensetzung und
(c) Härten der antikorrosiven Beschichtung bis zur Staubtrockenheit bei Raumtemperatur innerhalb eines Zeitraumes von bis zu 300 Minuten.

Es ist ersichtlich, dass das Verfahren zum Aufbringen der erfindungsgemäßen Beschichtungszusammensetzung besonders einfach durchzuführen ist.

Die Reinigung des Metallsubstrats ist wichtig für eine gute Haftung der antikorrosive Beschichtung. Typische Reinigungsschritte sind das mechanische Reinigen, beispielsweise ein Strahlen mit Strahlgut-Partikeln, wie beispielsweise Glaspartikeln, Edelstahl- oder Granatsandgranulat, oder ein mechanisches Reinigen, wie z. B. Schmirgeln oder Bürsten, des Metallsubstrats. Aber auch ein Entfetten, ein Waschen mit Lösungsmittel oder Wasser, gegebenenfalls unter Zusatz von Reinigungsmittel, eine alkalische oder saure Wäsche sind geeignet, die Oberfläche des Metallsubstrats für die antikorrosive Beschichtung vorzubereiten. Besonders bevorzugt ist eine Kombination aus Strahlen mit Strahlgut-Partikeln, gefolgt von einer heißen alkalischen Entfettung verbunden mit mechanischer Reinigung.

Die antikorrosive Beschichtungszusammensetzung kann direkt auf die gereinigte Oberfläche des Metallsubstrats aufgebracht werden. Alternativ kann die gereinigte Oberfläche des Metallsubstrats vorbehandelt werden.

Üblicherweise wird im Rahmen der vorliegenden Erfindung nach dem Reinigen eine Vorbehandlungsschicht, insbesondere eine Konversionsschicht, auf das metallische Substrat aufgebracht.

Als Vorbehandlung kann eine Vorbehandlungszusammensetzung auf die gereinigte Oberfläche des Metallsubstrats aufgebracht werden, die eine Vorbehandlungsschicht auf dem Substrat erzeugt.

Besonders gute Ergebnisse werden im Rahmen der vorliegende Erfindung erhalten, wenn die Vorbehandlungsschicht erhältlich ist durch Phosphatierung und/oder Chromatierung.

Diese Vorbehandlungszusammensetzung kann eine Konversions-Beschichtungszusammensetzung sein, beispielsweise eine Phosphatierungszusammensetzung.

Bekannt und geeignet sind unter anderem eine Entfettungsphosphatierung, eine Trikationenphosphatierung, eine Zinkphosphatierung oder eine Eisenphosphatierung.

Gemäß einer bevorzugten Ausführungsform ist die Vorbehandlungsschicht erhältlich ist durch Behandeln des Substrats mit einer Vorbehandlungszusammensetzung, insbesondere einer Phosphatierungszusammensetzung. In diesem Zusammenhang hat es sich bewährt, wenn die Vorbehandlungszusammensetzung Phosphorsäure und gegebenenfalls mindestens eine Verbindung eines Elements ausgewählt aus der Gruppe von Titan, Zirkonium, Nickel, Mangan, Zink, Silicium, Magnesium, Aluminium, Eisen, Vanadium, Molybdän und Wolfram und deren Mischungen enthält.

Alternativ kann die Vorbehandlungszusammensetzung eine Chromatierungs-Zusammensetzung sein, vorzugsweise mit Chrom-III-Ionen. Die Vorbehandlungszusammensetzung kann auch Titan- oder Zirkoniumverbindungen enthalten. Auch eine saure oder alkalische Passivierung ist als Vorbehandlung geeignet. Ebenfalls geeignet ist eine Kombination von Vorbehandlungen, beispielsweise eine saure Passivierung gefolgt von einer alkalischen Passivierung.

Besonders vorteilhaft ist eine Vorbehandlung, bei der zunächst eine Konversionsbehandlung erfolgt. Die Konversionsbehandlung wird dann gefolgt von einem Primer, der die Haftung der erfindungsgemäßen Beschichtungszusammensetzung auf dem metallischen Substrat verbessert, in der Regel einem siliciumbasierten Primer, z. B. einem Primer auf der Basis eines Silikats, eines Silans oder Siloxans, beispielsweise in einer Sol-Gel-Schicht vernetzt. Der siliciumbasierte Primer kann auch Mischungen oder Verbindungen der vorbenannten Silikate, Silane oder Siloxane enthalten. Diese vorteilhaft kombinierten Vorbehandlungsschichten sind außerordentlich dünn, sie weisen eine Schichtstärke von weniger als 1 µm auf. Die hier als vorteilhaft beschriebene Kombination von zwei Vorbehandlungen verbessert die Nasshaftung der erfindungsgemäßen Beschichtung auf dem metallischen Substrat, vor allem, wenn vor dem siliciumbasierten Primer eine Phosphatierung des metallischen Substrats durchgeführt wird. Die verbesserten Haftungseigenschaften der erfindungsgemäßen Beschichtungszusammensetzung zeigen sich vor allem während des Salzsprühtests.

Die Vorbehandlungszusammensetzungen sind jeweils flüssig; sie werden durch Tauchen, Walzen, Streichen, Gießen oder andere übliche Auftragsverfahren auf das gereinigte Metallsubstrat aufgebracht. Nach dem Vorbehandeln erfolgt gegebenenfalls ein Trocknen des Metallsubstrats.

Es wird bevorzugt, das Metallsubstrat vor dem Aufbringen der antikorrosive Beschichtungszusammensetzung mit einer Vorbehandlung zu versehen, insbesondere, da sich herausgestellt hat, dass die erfindungsgemäße antikorrosive Beschichtungszusammensetzung die kathodische Schutzwirkung auch dann voll entfaltet, wenn zuvor eine Vorbehandlung, z. B. eine Phosphatierung oder Passivierung, auf die Oberfläche des Metallsubstrats aufgebracht wurde.

Nach einer vorteilhaften Ausführung der Erfindung wird auf die erfindungsgemäße Beschichtung, die wegen der darin enthaltenen kathodisch aktiven Metallpartikel auch als Basecoat bezeichnet wird, mindestens eine weitere Beschichtung, auch Topcoat genannt aufgebracht. Dabei handelt es sich meist um eine weitere Beschichtungszusammensetzung, die keine kathodisch aktiven Metallpartikel enthält, die aber häufig dasselbe Bindemittel oder dasselbe Bindemittelsystem wie der Basecoat aufweist. Der Topcoat kann also in einer einfachen Ausführung nur ein Bindemittel oder ein Bindemittelsystem ohne weitere Zusätze oder Additive aufweisen. Der Topcoat kann jedoch auch ein völlig anderes Bindemittel oder Bindemittelsystem aufweisen; Voraussetzung für die Eignung dieses anderen Bindemittel oder Bindemittelsystem ist lediglich, dass es auf der antikorrosiven Beschichtung haftet. Vorzugsweise ist der Topcoat ebenfalls eine bei Raum- oder Umgebungstemperatur härtende Beschichtung. Dem Topcoat können aber zusätzlich auch farbgebende oder andere Additive zugesetzt sein. Typische Zusätze sind farbgebende Pigmente, Feststoff-Schmierstoffe wie beispielsweise Molybdänsulfid oder Polytetrafluorethylen, die in Partikelform vorliegen. Beispiele für geeignete Topcoats oder Decklacke sind Sol-Gel-Beschichtungszusammensetzungen, organische 2-Komponenten-Epoxidzusammmensetzungen, Polyurethanlacke, radikalisch vernetzende Systeme wie z.B. Acrylate, aber auch wässrige organische Dispersionen oder silikatische Topcoats.

Für weitergehende Einzelheiten zu diesem Erfindungsaspekt kann zur Vermeidung unnötiger Wiederholungen auf die vorangehenden Ausführung zu der erfindungsgemäßen Beschichtungszusammensetzung verwiesen werden, welche in Bezug auf das erfindungsgemäße Verfahren entsprechend gelten.

Schließlich ist weiterer Gegenstand der vorliegenden Erfindung - gemäß einem d r i t te n Aspekt der vorliegenden Erfindung - ein Metallsubstrat, beschichtet mit einer antikorrosiven Beschichtung, erhältlich aus einer Beschichtungszusammensetzung nach einem der Ansprüche 1 bis 9, aufweisend eine Matrix aus einem Polysiloxan und mindestens einem Vernetzer sowie Metallpartikel.

Für weitergehende Einzelheiten zu diesem Erfindungsaspekt kann zur Vermeidung unnötiger Wiederholungen auf die vorangehenden Ausführung zu den weiteren Erfindungsaspekten verwiesen werden, welche in Bezug auf das erfindungsgemäße Metallsubstrat entsprechend gelten.

Nachfolgend werden Details der Erfindung anhand von Ausführungsbeispielen näher erläutert:
Eine typische Rezeptur für die erfindungsgemäße antikorrosive Beschichtungszusammensetzung sieht vor:
   - 14 Gew.-% Bindemittel: Methylpolysiloxan mit Methoxy- und /oder Ethoxy-Funktionalität mit einer Viskosität von 60 bis 75 mPas;
   - 1 Gew.-% Vernetzer: Acetyl-aceto-Titanat, z. Bsp.: Tyzor AA 105, Fa. Dorf Ketal;
   - 80 Gew.-% Zinkstaub: sphärische Metallpartikel mit einer mittleren Partikelgröße von 6 z.Bsp.: Zinkastaub UP6, der FA. Umicore;
   - 5 Gew.-% Zinklamellen: lamellenförmige Zinkpartikel, z.Bsp.: Stapa Zn8, der Fa. Eckart.
Zunächst wird das Methylpolysiloxan vorgelegt, dann werden nach und nach die Metallpartikel (sphärisch und lamellenförmig) mittels eines Dissolvers bei mittlerer Rührgeschwindigkeit dispergiert. Der Vernetzer, hier Acetyl-aceto-Titanat, wird abschließend am Ende des Rührvorgangs zugegeben und bei mäßiger Rührgeschwindigkeit untergemischt.

Alternativ ebenfalls gut geeignete Polysiloxane und Vernetzer sind vorstehend in der Beschreibung genannt. Die vorstehend genannten Komponenten für das Bindemittel und den Vernetzer werden in den in Tabelle 1 und 2 dargestellten Rezepturen ebenfalls verwendet.

Die so hergestellte antikorrosive Beschichtungszusammensetzung kann ohne weiteres über sechs Monate oder zwölf Monate gelagert werden. Ist abzusehen, dass die Beschichtungszusammensetzung länger als sechs Monate gelagert werden soll, ist sicherzustellen, dass sich die in der Beschichtungszusammensetzung enthaltenen Metallpartikel wieder aufrühren lassen, beispielsweise wie vorstehend beschrieben durch Zusatz von lamellenförmigen Metallpartikeln.

Unverzinkte Stahlbleche (DC 04-Stahl) werden gereinigt, zunächst durch Strahlen mit Edelstahlpartikeln, Glaspartikeln oder Granatsand, nachfolgend durch eine heiße, alkalische Entfettung mit gleichzeitiger mechanischer Reinigung. Die Entfettung wird vorliegend mit einer alkalischen Reinigungslösung, beispielsweise Ridoline C 72 von Henkel mit einer 4 %-igen Lösung für 1 Minute bei 70 °C durchgeführt. Die mechanische Reinigung erfolgt durch Bürsten. Das gereinigte Stahlblech wird anschließend zweimal in demineralisiertem Wasser gewaschen und mit Druckluft getrocknet.

Anschließend erfolgt eine Vorbehandlung durch Tauchen in eine Behandlungslösung, die eine Titanverbindung enthält, und die unter dem Handelsnamen Bonderite 1455 von Henkel vertrieben wird. Es wird für 5 Sekunden in eine 4 %-ige Lösung getaucht, anschließend wird der Überschuss abgezogen und das gereinigte und vorbehandelte Stahlblech wird bei 60 °C getrocknet.

Anschließend wird die erfindungsgemäße Beschichtungszusammensetzung auf das vorbehandelte Stahlblech durch Sprühen aufgetragen. Aber auch die anderen vorstehend genannten Auftragsverfahren sind möglich. Die antikorrosive Beschichtungszusammensetzung nach der Erfindung kann in Schichtstärken von 5 µm bis 100 µm aufgetragen werden, beispielsweise werden für die hier vorgestellten Ausführungsbeispiele jeweils Schichtstärken von 20 µm aufgetragen. Die Schichtstärke von 20 µm wird erreicht durch Spritzen mit einer Lackierpistole. Die antikorrosive Beschichtungszusammensetzung ist nach 1 Stunde Verweilen bei Raumtemperatur staubtrocken.

Alternative Beschichtungszusammensetzungen sind in den Tabellen 1 und 2 aufgeführt. Die Formulierungen der Versuche 1 bis 8 wurden auf die gleiche Weise hergestellt wie beim vorstehenden Ausführungsbeispiel erläutert.

**Tabelle 1 Antikorrosive Beschichtungszusammensetzungen (Vergleichsbeispiele und erfindungsgemäße Zusammensetzungen)**

| **Formulierung** | 1 * | 2* | 3 | 4 |
|---|---|---|---|---|
| Bindemittel¹ | 36,5 | 36,5 | 29 | 28 |
| Vernetzer¹ | 1,5 | 1,5 | 1,0 | 1,0 |
| Zinkstaub¹ | 60 | 60 | 70 | 70 |
| Zinklamelle¹ | 2 | 2 | - | 1 |
| Lösungsmittel¹ | - | - | - | - |

| **Vorbehandlung** | | | | |
|---|---|---|---|---|
| Reinigung | gestrahlt | gestrahlt | gestrahlt | gestrahlt |
| Phosphatierung / Konversionsbehandlung | keine | ja | ja | ja |

| **Korrosionsbeständigkeit** | | | | |
|---|---|---|---|---|
| SST/ Rotrost Inhibierung am Ritz | - | - | +/- | +/- |
| SST/ Rotrost Inhibierung auf der Fläche | + | + | + | + |
| Nasshaftung/ Haftung im SST | - | +++ | +++ | +++ |

| | | | | |
|---|---|---|---|---|
| *Vergleichsbeispiel ¹Angaben in Gew.-% | | | | |

**Tabelle 2 Antikorrosive Beschichtungszusammensetzungen (erfindungsgemäße Zusammensetzungen)**

| **Formulierung** | 5² | 6 | 7 | 8 |
|---|---|---|---|---|
| Bindemittel¹ | 10 | 15 | 14 | 10 |
| Vernetzer¹ | 5 | 1,5 | 1,4 | 0,8 |
| Zinkstaub¹ | 83 | 81,5 | 77 | 88,5 |
| Zinklamelle¹ | 2 | 2 | 2 | 0,7 |
| Lösungsmittel¹ | - | - | 5,6 | - |

| **Vorbehandlung** | | | | |
|---|---|---|---|---|
| Reinigung | gestrahlt | gestrahlt | gestrahlt | gestrahlt |
| Phosphatierung/ Konversionsbehandlung | ja | ja | ja | |

| **Korrosionsbeständigkeit** | | | | |
|---|---|---|---|---|
| SST/ Rotrost Inhibierung am Ritz | +++ | +++ | +++ | +++ |
| SST/ Rotrostinhibierung auf Fläche | +++ | +++ | +++ | +++ |
| Nasshaftung/ Haftung im SST | +++ | +++ | +++ | +++ |

| | | | | |
|---|---|---|---|---|
| ¹ Angaben in Gew.-% ² Nicht erfinderisch | | | | |

Um die antikorrosiven Eigenschaften der Beschichtung zu prüfen, die mit den vorstehenden Formulierungen auf ein unverzinktes Stahlblech aufgetragen wurde, wurde sieben Tage nach dem Aufbringen der Beschichtung die Beschichtung bis auf das Stahlblech geritzt und es wurde ein neutraler Salzsprühtest durchgeführt. Untersucht und bewertet wurde die Entwicklung von Rotrost sowohl am Ritz als auch in der Fläche. Die Entwicklung von Rotrost gibt Aufschluss über die Güte bzw. Wirkung des kathodischen Korrosionsschutzes, der sich dadurch auszeichnet, dass Verletzungen der Oberflächenbeschichtung dem Rotrost keine Angriffsfläche bieten, sondern dass vielmehr die Verletzung elektrochemisch überbrückt wird, sofern sie nicht zu großflächig ist.

Die beschichteten Stahlbleche zeigen in den besten Ausführungen eine Rotrostbeständigkeit am Ritz von mehr als 700 Stunden (in Tabelle 1 und 2 bewertet mit +++). Aber auch eine Rotrostbeständigkeit von mehr als 500 Stunden (bewertet mit ++) bzw. eine Rotrostbeständigkeit von mehr als von mehr als 300 Stunden (bewertet mit +) ist für zahlreiche Anwendungen akzeptabel. Die grundlegende Brauchbarkeit einer antikorrosiven Beschichtung, die durch Aufbringen der erfindungsgemäßen Beschichtungszusammensetzung erreicht wird, wird mit einer Rotrostbeständigkeit von mehr als 120 Stunden (bewertet mit +/-) erzielt, eine nicht brauchbare Beschichtung wird in den Tabellen 1 und 2 als "-" bezeichnet.

Die Auswertung der antikorrosiven Eigenschaften der Beschichtung, die durch das Aufbringen der erfindungsgemäßen Beschichtungszusammensetzung auf das Metallsubstrat erzeugt wurde, zeigt unerwartet, dass die Rotrostbeständigkeit auch dann beste Ergebnisse aufweist, wenn eine Phosphatierung als Vorbehandlung durchgeführt wurde. Da in den meisten anderen Oberflächenbeschichtungen eine Phosphatierung zu einer Verringerung der Schutzwirkung nachfolgender kathodischer Beschichtungszusammensetzungen bzw. Beschichtungen führt, ist hierin eine besondere Qualität der erfindungsgemäßen Beschichtung zu sehen.

Die erfindungsgemäße Beschichtung kann energiesparend und mit minimalen Aufwand aufgebracht werden, da durch das Aushärten bei Raumtemperatur keine Trocknungsvorrichtungen erforderlich sind und auch keine Energie zum Erzeugen von Wärme zum Härten bzw. Trocknen. Zudem können so auch Metallsubstrate beschichtet werden, die sich in einer Beschichtungsanlage mit Trocknungsvorrichtungen nicht beschichten lassen, insbesondere fest verbaute Metallsubstrate, wie z. B. Brücken oder andere Bauwerke.

## Patentansprüche

1. Antikorrosive Beschichtungszusammensetzung, aufweisend ein mindestens ein Polysiloxan und Metallpartikel sowie mindestens einen Vernetzer, wobei die Beschichtungszusammensetzung bei Raumtemperatur chemisch vernetzt, wobei Polysiloxan und Vernetzer gemeinsam ein reaktives Bindemittelsystem bilden, wobei der Anteil des Polysiloxans am reaktiven Bindemittelsystem mehr als 90 Gew.-% und der komplementäre Anteil des Vernetzers weniger als 10 Gew.-% beträgt, wobei der Vernetzer ausgewählt ist aus der Gruppe von reaktiven Silanen, Silanhydrolysaten, Titanaten, Zirkonaten, metallorganischen Verbindungen, Säuren und Basen sowie deren Mischungen und wobei die Beschichtungszusammensetzung einen Anteil an Metallpartikeln im Bereich von 70 bis 98 Gew.-%, bezogen auf die Beschichtungszusammensetzung, aufweist.

2. Antikorrosive Beschichtungszusammensetzung nach Anspruch 1, **dadurch gekennzeichnet, dass** die Beschichtungszusammensetzung zumindest im Wesentlichen frei von Wasser ist, vorzugsweise frei von Wasser ist.

3. Antikorrosive Beschichtungszusammensetzung nach einem der Ansprüche 1 oder 2, **dadurch gekennzeichnet, dass** die Beschichtungszusammensetzung zumindest im Wesentlichen frei ist von organischen Lösemitteln und/oder dass die Beschichtungszusammensetzung organische Lösemittel, insbesondere VOCs, in Mengen von höchstens 5 Gew.-%, insbesondere 3 Gew.-%, bezogen auf die Beschichtungszusammensetzung, aufweist und/oder dass die Beschichtungszusammensetzung organische Lösemittel in Mengen von 0,01 bis 5 Gew.-%, insbesondere 0,1 bis 3 Gew.-%, bezogen auf die Beschichtungszusammensetzung, aufweist.

4. Antikorrosive Beschichtungszusammensetzung nach einem der vorangehenden Ansprüche, **dadurch gekennzeichnet, dass** die Beschichtungszusammensetzung in Gegenwart von Luftfeuchtigkeit vernetzt.

5. Antikorrosive Beschichtungszusammensetzung nach einem der vorangehenden Ansprüche, **dadurch gekennzeichnet, dass** das Polysiloxan ein reaktives Polysiloxan ist, insbesondere ausgewählt aus silanolfunktionalisierten Polysiloxanen und alkoxyfunktionalisierten Polysiloxanen sowie deren Mischungen.

6. Antikorrosive Beschichtungszusammensetzung nach einem der vorangehenden Ansprüche, **dadurch gekennzeichnet,**
**dass** das Polysiloxan eine dynamische Viskosität nach Brookfield bei 20 °C von höchstens 10.000 mPas aufweist.

7. Antikorrosive Beschichtungszusammensetzung nach einem der vorangehenden Ansprüche, **dadurch gekennzeichnet, dass** die Metallpartikel ausgewählt sind aus der Gruppe von Zink, Aluminium, Magnesium, Mangan und Nickel sowie deren Mischungen und Legierungen.

8. Antikorrosive Beschichtungszusammensetzung nach einem der vorangehenden Ansprüche, **dadurch gekennzeichnet, dass** die Beschichtungszusammensetzung einen Anteil an Metallpartikeln im Bereich 80 bis 96 Gew.-%, vorzugsweise 90 bis 96 Gew.-%, bezogen auf die Beschichtungszusammensetzung, aufweist.

9. Verfahren zum Beschichten eines Metallsubstrats mit einer antikorrosiven Beschichtungszusammensetzung nach einem der Ansprüche 1 bis 8, umfassend die folgenden Verfahrensschritte:
(a) Reinigen des Metallsubstrats
(b) Aufbringen der antikorrosiven Beschichtungszusammensetzung und
(c) Härten der antikorrosiven Beschichtung bis zur Staubtrockenheit bei Raumtemperatur innerhalb eines Zeitraumes von bis zu 300 Minuten.

10. Verfahren nach Anspruch 9, **dadurch gekennzeichnet, dass** nach dem Reinigen eine Vorbehandlungsschicht, insbesondere eine Konversionsschicht, auf das Metallsubstrat aufgebracht wird.

11. Verfahren nach Anspruch 10, **dadurch gekennzeichnet, dass** die Vorbehandlungsschicht erhältlich ist durch Phosphatierung und/oder Chromatierung.

12. Verfahren nach mindestens einem der Ansprüche 9 bis 11, **dadurch gekennzeichnet, dass** auf die antikorrosive Beschichtung mindestens eine weitere Beschichtung aufgebracht wird.

13. Metallsubstrat, beschichtet mit einer antikorrosiven Beschichtung, erhältlich aus einer Beschichtungszusammensetzung nach einem der Ansprüche 1 bis 9, aufweisend eine Matrix aus einem Polysiloxan und mindestens einem Vernetzer sowie Metallpartikel.

14. Metallsubstrat nach Anspruch 13, beschichtet mit einer antikorrosiven Beschichtung sowie mindestens einer weiteren Beschichtung, die auf die antikorrosive Beschichtung aufgebracht ist.

## Claims

1. An anticorrosive coating composition comprising at least one polysiloxane and metal particles and at least one crosslinker, said coating composition chemically crosslinking at room temperature, wherein said polysiloxane and said crosslinker together form a reactive binder system, wherein the proportion of said polysiloxane in said reactive binder system is greater than 90% by weight and the complementary proportion of said crosslinker is less than 10% by weight, wherein said crosslinker is selected from the group consisting of reactive silanes, silane hydrolysates, titanates, zirconates, zirconium hydrolysates and zirconium hydrolysates.% and the complementary proportion of the crosslinker is less than 10 wt.%, wherein the crosslinker is selected from the group of reactive silanes, silane hydrolysates, titanates, zirconates, organometallic compounds, acids and bases and mixtures thereof and wherein the coating composition has a proportion of metal particles in the range of 70 to 98 wt.%, based on the coating composition.

2. An anticorrosive coating composition according to claim 1, **characterized in that** the coating composition is at least substantially free of water, preferably free of water.

3. The anticorrosive coating composition according to any one of claims 1 or 2, **characterized in that** the coating composition is at least substantially free of organic solvents and/or **in that** the coating composition comprises organic solvents, in particular VOCs, in amounts of at most 5% by weight, in particular 3% by weight, based on the coating composition, and/or **in that** the coating composition comprises organic solvents in amounts of 0.01 to 5% by weight, in particular 0.1 to 3% by weight, based on the coating composition.

4. An anti-corrosive coating composition according to any one of the preceding claims, **characterised in that** the coating composition cross-links in the presence of atmospheric moisture.

5. An anticorrosive coating composition according to any one of the preceding claims, **characterized in that** the polysiloxane is a reactive polysiloxane, in particular selected from silanol-functionalized polysiloxanes and alkoxy-functionalized polysiloxanes and mixtures thereof.

6. An anti-corrosive coating composition according to any one of the preceding claims, **characterized in that**,
**in that** the polysiloxane has a Brookfield dynamic viscosity at 20 °C of not more than 10 000 mPas.

7. An anticorrosive coating composition according to any one of the preceding claims, **characterized in that** the metal particles are selected from the group of zinc, aluminum, magnesium, manganese and nickel and mixtures and alloys thereof.

8. An anticorrosive coating composition according to any one of the preceding claims, **characterized in that** the coating composition has a content of metal particles in the range from 80 to 96% by weight, preferably from 90 to 96% by weight, based on the coating composition.

9. A method of coating a metal substrate with an anti-corrosive coating composition according to any one of claims 1 to 8, comprising the following method steps:
(a) Cleaning the metal substrate
(b) applying the anti-corrosive coating composition; and
(c) Curing of the anti-corrosive coating to dust dryness at room temperature within a period of up to 300 minutes.

10. The method according to claim 9, **characterized in that** after cleaning a pretreatment layer, in particular a conversion layer, is applied to the metal substrate.

11. The process according to claim 10, **characterized in that** the pretreatment layer is obtainable by phosphating and/or chromating.

12. The method according to at least one of claims 9 to 11, **characterized in that** at least one further coating is applied to the anticorrosive coating.

13. A metal substrate coated with an anti-corrosive coating obtainable from a coating composition according to any one of claims 1 to 9, comprising a matrix of a polysiloxane and at least one crosslinker, and metal particles.

14. The metal substrate of claim 13, coated with an anticorrosive coating and at least one further coating applied to the anticorrosive coating.

## Revendications

1. Composition de revêtement anticorrosive, comprenant au moins un polysiloxane et des particules métalliques ainsi qu'au moins un agent réticulant, la composition de revêtement se réticulant chimiquement à température ambiante, le polysiloxane et l'agent réticulant formant ensemble un système de liant réactif, la proportion du polysiloxane dans le système de liant réactif étant supérieure à 90 % en poids et la proportion complémentaire de l'agent réticulant étant inférieure à 10 % en poids, l'agent réticulant étant choisi dans le groupe des silanes réactifs, des hydrolysats de silane, des titanates, des zirconates, des composés organométalliques, des acides et des bases et de leurs mélanges, et la composition de revêtement ayant une proportion de particules métalliques dans la plage de 70 à 98 % en poids, rapporté à la composition de revêtement.

2. Composition de revêtement anticorrosive selon la revendication 1, **caractérisée en ce que** la composition de revêtement est au moins sensiblement exempte d'eau, de préférence est exempte d'eau.

3. Composition de revêtement anticorrosive selon l'une des revendications 1 ou 2, **caractérisée en ce que** la composition de revêtement est au moins sensiblement exempte de solvants organiques et/ou **en ce que** la composition de revêtement comprend des solvants organiques, notamment des COV, à raison d'au plus 5 % en poids, notamment 3 % en poids, rapporté à la composition de revêtement, et/ou **en ce que** la composition de revêtement contient des solvants organiques à raison de 0,01 à 5 % en poids, notamment de 0,1 à 3 % en poids, rapporté à la composition de revêtement.

4. Composition de revêtement anticorrosive selon l'une des revendications précédentes, **caractérisée en ce que** la composition de revêtement se réticule en présence d'humidité atmosphérique.

5. Composition de revêtement anticorrosive selon l'une des revendications précédentes, **caractérisée en ce que** le polysiloxane est un polysiloxane réactif, notamment choisi parmi les polysiloxanes à fonctionnalité silanol et les polysiloxanes à fonctionnalité alcoxy et leurs mélanges.

6. Composition de revêtement anticorrosive selon l'une des revendications précédentes, **caractérisée en ce que** le polysiloxane présente une viscosité dynamique Brookfield à 20°C d'au plus 10 000 mPa.s.

7. Composition de revêtement anticorrosive selon l'une des revendications précédentes, **caractérisée en ce que** les particules métalliques sont choisies dans le groupe du zinc, de l'aluminium, du magnésium, du manganèse et du nickel et ainsi que de leurs mélanges et alliages.

8. Composition de revêtement anticorrosive selon l'une des revendications précédentes, **caractérisée en ce que** la composition de revêtement comprend une proportion de particules métalliques comprise entre 80 et 96 % en poids, de préférence entre 90 et 96 % en poids, rapporté à la composition de revêtement.

9. Procédé de revêtement d'un substrat métallique avec une composition de revêtement anticorrosive selon l'une quelconque des revendications 1 à 8, comprenant les étapes de procédé suivantes :
(a) nettoyage du substrat métallique
(b) application de la composition de revêtement anticorrosive et
(c) durcissement du revêtement anticorrosif jusqu'à l'état sec hors-poussière à température ambiante dans un délai allant jusqu'à 300 minutes.

10. Procédé selon la revendication 9, **caractérisé en ce qu'**après nettoyage, une couche de prétraitement, notamment une couche de conversion, est appliquée sur le substrat métallique.

11. Procédé selon la revendication 10, **caractérisé en ce que** la couche de prétraitement peut être obtenue par phosphatation et/ou chromatation.

12. Procédé selon au moins l'une des revendications 9 à 11, **caractérisé en ce qu'**au moins un autre revêtement est appliqué sur le revêtement anticorrosif.

13. Substrat métallique, revêtu d'un revêtement anticorrosif, pouvant être obtenu à partir d'une composition de revêtement selon l'une des revendications 1 à 9, comprenant une matrice d'un polysiloxane et au moins d'un agent réticulant ainsi que des particules métalliques.

14. Substrat métallique selon la revendication 13, revêtu d'un revêtement anticorrosif et d'au moins un autre revêtement qui est appliqué sur le revêtement anticorrosif.
